# EUROPÄISCHE PATENTANMELDUNG

(11) **EP 2 642 036 A1**
(43) Veröffentlichungstag der Anmeldung: **25.09.2013**
(21) Anmeldenummer: 12160840.0
(22) Anmeldetag: 22.03.2012
(51) Int. Cl.: E04B 1/41

(54) **Verwendung von faserverstärktem Polyurethan zur Bildung einer Schiene für eine Montageanordnung**

(71) Anmelder: Bayer MaterialScience AG, 51373 Leverkusen (DE)
(72) Erfinder: Die Erfindernennung liegt noch nicht vor

(57) **Zusammenfassung**

Die Erfindung betrifft die Verwendung von faserverstärktem Polyurethan zur Bildung einer Schiene (10, 11) für eine Montageanordnung zur Anordnung wenigstens eines Elementes (12) an einem Untergrund (13) oder an wenigstens einem Aufnahmekörper, insbesondere einem Gerüst, wobei die Schiene (10, 11) einen C-förmigen Querschnitt mit einer Öffnungsseite (14) aufweist, sodass in der Schiene (10, 11) wenigstens ein Hintergreifelement (15) zur Verbindung mit dem anzuordnenden Element (12) aufnehmbar ist.

## Beschreibung

Die vorliegende Erfindung betrifft eine Schiene für eine Montageanordnung zur Anordnung wenigstens eines Elementes an einem Untergrund oder an einem Aufnahmekörper, insbesondere einem Gerüst, wobei die Schiene einen C-förmigen Querschnitt mit einer Öffnungsseite aufweist, sodass in der Schiene wenigstens ein Hintergreifelement zur Verbindung mit dem anzuordnenden Element aufnehmbar ist.

Der Untergrund kann beispielsweise die Außenwand oder der Deckenrand eines Gebäudes sein, oder der Untergrund ist durch einen Aufnahmekörper gebildet, insbesondere durch ein Gerüst. Beispielsweise können Hallen, insbesondere Kühlhallen aus einem Stahlgerüst gebildet sein, an dem Elemente, insbesondere wärmeisolierende Fassadenelemente, außenseitig oder innenseitig angebracht werden können. Zur Anbringung der Elemente am Untergrund oder am Aufnahmekörper dienen Schienen, und werden die Schienen an einem Untergrund aus einem aushärtbarem Material angeordnet, so weisen die Schienen Anker auf, die in das aushärtbare Material eingelassen werden können. Werden die Schienen an einem Aufnahmekörper, beispielsweise an einem Stahlgerüst angeordnet, so werden die Schienen zumeist mit der der Öffnungsseite gegenüberliegenden Rückseite am Gerüst angebracht.

Das Hintergreifelement zur Anordnung in der Schiene kann beispielsweise als Hammerkopfschraube ausgeführt sein, wobei auch Nutensteine bekannt sind, in die ein Gewindeschaft eingeschraubt werden kann, der sich durch einen durchgehenden Schlitz in der Öffnungsseite der Schiene hindurch erstreckt und an den das Element befestigt werden kann. Der Vorteil bei der Verwendung einer Schiene ist die in Längsrichtung der Schiene flexible Anordnung des Elementes, da das Hintergreifelement längs der Schiene an einer beliebigen Position in der Schiene verankert werden kann.

Das Element, das mittels der Schiene am Untergrund oder am Aufnahmekörper, insbesondere am Gerüst, angeordnet werden kann, kann beispielsweise ein Fassadenelement sein, wobei auch sonstige Elemente wie Paneele, Verkleidungselemente, Schutzelemente oder sogar Mauerwerk durch die Schiene über zugeordnete Hintergreifelemente am Untergrund oder am Aufnahmekörper angeordnet werden können. Ebenso können Installationen von Kabeln, Rohren oder Halterungen, beispielsweise für das Kettenwerk einer Bahnanlage, als Elemente mit einer solchen Schiene an einer Wand, beispielsweise an der Innenwand in einem Tunnel, beziehungsweise an einem Aufnahmekörper vorgenommen werden.

Aus der DE 10 2009 033 804 A1 ist eine Schiene für eine Montageanordnung zur Anordnung eines Elementes an einem Aufnahmekörper bekannt, und das Element ist in der gezeigten Anordnung durch ein Solarpaneel gebildet. Die Schiene weist eine Öffnungsseite auf, in die ein Hintergreifelement eingesetzt ist und das zur Verbindung mit dem Solarpaneel dient. Die Schiene ist als Montageschiene bezeichnet und es ist angegeben, dass diese durch ein Strangziehen, ein Strangpressen oder ein ähnliches Verfahren aus einer Aluminiumlegierung hergestellt wird. Ferner ist angegeben, dass derartige Schienen aus Blech hergestellt werden können, die üblicherweise einen C-förmigen Querschnitt mit einem durchgehenden Schlitz aufweisen.

Die DE 10 2009 030 768 A1 offenbart eine Schiene für eine Montageanordnung zur Anordnung eines Elementes an einer Wand oder an einem Aufnahmekörper, und die Schiene kann durch entsprechende Umformung aus Blech oder durch ein Strangziehen oder ein Strangpressen hergestellt werden. In die Schiene können Hintergreifelemente zur Verbindung mit dem anzubringenden Element eingesetzt werden, und die Hintergreifelemente können in Längsrichtung der Schiene beweglich angeordnet werden.

Aus der DE 10 2010 028 349 A1 ist eine Schiene für eine Montageanordnung an einer Wand bekannt, wobei die Schiene als Ankerschiene ausgeführt ist und die Schiene ist in einen die Wand bildenden Betonkörper eingelassen. Die Schiene weist eine Öffnungsseite mit einem durchgehenden Schlitz auf, in den Hintergreifelemente eingesetzt werden können, die mit dem anzubringenden Element verbunden werden können. Mit Bezug auf das Material der Schiene ist angegeben, dass diese aus Eisen, aus Stahl, aus Aluminium oder aus einem Kunststoff bestehen kann. Derartige Ankerschienen oder Montageschienen werden in der Bautechnik in Beton eingegossen oder eingebettet, sodass lediglich die Öffnungsseite oder ein sonstiger Außenbereich der Schiene frei zugänglich ist und mit der Oberfläche der Wand abschließt. Die Schiene ist als Ankerschiene mit einem Anker ausgebildet, der in der Regel auf der Rückseite der Schiene angeordnet und so ebenfalls im Beton eingelassen ist. In die Schiene können Hintergreifelemente eingebracht werden, an die schließlich Elemente wie Fassadenelemente oder beispielsweise auch Halterungen für Kabel, Schläuche oder sonstige an einer Wand zu montierende Gegenstände angebracht werden können.

Gelangt die Schiene mit Beton in Kontakt, so ist eine hohe chemische Beständigkeit des Werkstoffes der Schiene gegen Beton und weitere, verschiedene insbesondere basische Medien wünschenswert. Weiterhin können die Schienen zur Anordnung von Elementen dienen, die eine Wärme- oder Kälteschutzfunktion erfüllen und in Abhängigkeit vom Anwendungsfall kann gefordert sein, dass das Material der Schiene einen niedrigen Wärmeleitwert aufweist, insbesondere wenn an einer Wand anzubringende Elemente eine Wärmeschutzschicht bilden und Wärmebrücken zu vermeiden sind. Schließlich muss bei der Materialwahl berücksichtigt werden, dass die Schiene ebenfalls abhängig vom Anwendungsfall hohe mechanische Lasten tragen muss, so dass das Material der Schiene folglich entsprechende Festigkeitsanforderungen erfüllen muss.

DE 20 2007 003 903U1 beschreibt Verankerungssysteme von Gebäuden, wobei ein Teil des Verankerungssystem eine Ankerschiene aus einem faserverstärktem Polymer sein kann.

Vor dem Hintergrund des bekannten Standes der Technik ergibt sich eine Aufgabe der Erfindung, eine Schiene für eine Montageanordnung zur Anordnung wenigstens eines Elementes an einem Untergrund oder an einem Aufnahmekörper bereitzustellen, die eine sehr gute Beständigkeit gegenüber alkalischen Medien aufweist und weiterhin die vorteilhaften Eigenschaften von herkömmlichen Montageschienen zeigt, wie beispielsweise gute mechanische und thermische Eigenschaften.

Die vorstehend genannte Aufgabe wird gelöst durch die Verwendung von faserverstärktem Polyurethan zur Bildung einer Schiene für eine Montageanordnung zur Anordnung wenigstens eines Elementes an einem Untergrund oder an einem Aufnahmekörper, insbesondere einem Gerüst, wobei die Schiene einen C-förmigen Querschnitt mit einer Öffnungsseite aufweist, sodass in der Schiene wenigstens ein Hintergreifelement zur Verbindung mit dem anzuordnenden Element aufnehmbar ist, wobei die Schiene durch ein Pultrusionsverfahren hergestellt ist.

Ein faserverstärktes Polyurethan, das in einem Pultrusionsverfahren hergestellt wird, kann zur Bildung einer Schiene besonders dann vorteilhaft Verwendung finden, wenn die Schiene als Ankerschiene mit wenigstens einem Anker ausgebildet ist und wobei die Wand, an der die Schiene angeordnet wird, aus Beton gebildet ist. Dabei kann die aus faserverstärktem Polyurethan bestehende Schiene in den Beton eingegossen werden, insbesondere derart, dass die Öffnungsseite der Schiene etwa mit der Oberfläche der Wand abschließt, so dass die Schiene im Wesentlichen mit Beton umgossen ist. Faserverstärktes Polyurethan, das in einem Pultrusionsverfahren hergestellt wird, zeichnet sich durch eine besondere Beständigkeit gegenüber basischen Medien, wie beispielsweise Beton aus, sodass eine Ankerschiene, die in direktem Kontakt mit dem Beton gebracht wird, durch ihre chemische Beständigkeit über einen langen Zeitraum genutzt werden kann.

Ein aushärtbares Material bezeichnet insbesondere Beton, Mörtel und Zement.

Die Schiene kann auch als Montageschiene ausgeführt sein, und eine Montageschiene unterscheidet sich von einer Ankerschiene darin, dass an einer Montageschiene keine Wandanker angeordnet sind. Folglich kann die Montageschiene nicht nur ebenfalls in eine Wand eingelassen sein, sondern beispielsweise auch an einem Aufnahmekörper, insbesondere an einem Gerüst, angeordnet werden. Zur Verbindung der Montageschiene mit dem Aufnahmekörper kann eine Rückseite der Montageschiene dienen, die der Öffnungsseite der Schiene mit dem durchgehenden Schlitz gegenüberliegt und die Montageschiene kann mit der Rückseite auch am Aufnahmekörper, insbesondere am Gerüst, befestigt werden. Die Schiene weist eine C-Form auf, die plan ausgeführt sein kann und an der sich zwei Seitenschenkel erstrecken, die gegenüberliegend zur Rückseite in der Öffnungsseite enden und somit eine C-Form der Scheine bilden. Dabei ist der durchgehende Schlitz auf der Öffnungsseite der Schiene durch die beiden C-förmigen Enden der Schenkel gebildet.

Das faserverstärkte Polyurethan zur Bildung einer Schiene, insbesondere einer Ankerschiene und/oder einer Montageschiene, kann eine Faserkomponente aus einer Glasfaser, aus einer Karbonfaser und/oder aus einer Aramidfaser aufweisen. Alternativ eignen sich als Naturfasern Samenfasern, wie z.B. Baumwolle und Kapok, Bastfasern, wie z.B. Bambus, Brennnessel, Hanf, Jute, Kenaf, Leinen und Ramie, Blattfasern, wie z.B. Faserbananen, Caroä, Curauä, Neuseeländer Flachs und Sisal, sowie Fruchtfasern, wie z.B. Kokos. Als Thermoplastendlosfasern (organische Fasern) eignen sich Fasern aus Polyester, insbesondere Polyethylenterephthalat, Polyamid, Polyacrylnitril und Polymethylmethacrylat. Insbesondere kann die Schiene durch ein Pultrusionsverfahren hergestellt werden, und die Faserkomponente kann sich in Längsrichtung der Schiene erstrecken, wobei zusätzlich wenigstens eine quer zur Längsrichtung verlaufende Komponente die C-förmige Struktur der Schiene verstärken kann.

Das faserverstärkte Polyurethan kann aus den Komponenten Polyol und Polyisocyanat gebildet werden, wobei die Komponenten beispielsweise bereits vermischt in eine Injektionsbox eingebracht werden können, um mit der Faserkomponente eine Verbindung zu bilden, insbesondere um die Faserkomponente zu durchtränken.

Als Polyisocyanate können alle zur Herstellung von Polyurethanen bekannten aliphatischen, cycloaliphatische oder aromatischen Isocyanaten eingesetzt wer- den. Beispiele sind 2,2'-, 2,4- und 4,4'-Diphenylmethandiisocyanat, die Mischungen aus monomeren Diphenylmethandiisocyanaten und höherkemigen Homologen des Diphenylmethandiisocyanats (polymeres MDI), 4,4'-Methylenbis(cyclohexyl isocyanat), Isophorondiisocyanat (IPDI) oder dessen Oligomere, Toluylendiisocyanat (TDI), beispielsweise Isomere des Toluylendiisocyanats, wie 2,4- oder 2,6-Toluylendiisocyanat oder deren Mischungen, Tetramethylendiisocyanat oder dessen Oligomere, Hexamethylendiisocyanat (HDI) oder dessen Oligomere, Naphtylendiisocyanat (NDI) oder Mischungen daraus. Vorzugsweise werden als Polyisocyanate Isocyanate auf Basis des Diphenylmethandiisocyanats eingesetzt, insbesondere polymeres MDI. Vorzugsweise weist das Polyisocyanat eine Funktionalität von 2,0 bis 2,9, besonders bevorzugt 2,1 bis 2,8 auf. Die Viskosität der Polyisocyanate bei 25 °C nach DIN 53019-1 bis 3 liegt dabei vorzugsweise zwischen 5 und 600 mPas und besonders bevorzugt zwischen 10 und 300 mPas.

Bevorzugte Polyole sind Polyetherpolyole und/oder Polyesterpolyole mit 2 bis 8 mit Isocyanat reaktiven Wasserstoffatomen. Besonders bevorzugte Polyole sind Polyetherpolyole. Die OH-Zahl dieser Verbindungen liegt üblicherweise im Bereich von 12 bis 1100 mg KOH/g.

Die Polyetherpolyole werden nach bekannten Verfahren, beispielsweise durch anionische Polymerisation von Alkylenoxiden unter Zusatz mindestens eines Startermoleküls, das 2 bis 8, vorzugsweise 2 bis 6 und besonders bevorzugt 2 bis 4 reaktive Wasserstoffatome gebunden enthält, in Gegenwart von Katalysatoren erhalten. Als Katalysatoren können Alkalihydroxide, wie Natrium-oder Kaliumhydroxid oder Alkalialkoholate, wie Natriummethylat, Natrium- oder Kaliumethylat oder Kaliumisopropylat, oder bei kationischer Polymerisation Lewis-Säuren, wie Antimonpentachlorid, Bortrifluorid-Etherat oder Bleicherde als Katalysatoren eingesetzt werden. Weiter können als Katalysatoren auch Doppelmetallcyanidverbindungen, sogenannte DMC-Katalysatoren, eingesetzt werden.

Vorzugsweise werden als Alkylenoxide eine oder mehrere Verbindungen mit 2 bis 4 Kohlenstoffatomen im Alkylenrest, wie Tetrahydrofuran, Ethylenoxid, 1 ,2-Propylenoxid, oder 1 ,2- bzw. 2,3-Butylenoxid, jeweils alleine oder in Form von Mischungen, und vorzugsweise 1 ,2-Propylenoxid, und/oder Ethylenoxid, insbesondere 1 ,2-Propylenoxid eingesetzt. Als Startermoleküle kommen beispielsweise Ethylenglykol, 1,2-Propandiol, Diethylenglykol, Glycerin, Trimethylolpropan, Pentaerythrit, Zuckerderivate, wie Saccharose, Hexitderivate, wie Sorbit, Bisphenol-A, 2-Buten-1,4-diol, Toluoldiamin, Ethylendiamin, Diethylentriamin, 4,4'-Methylendianilin, 1 ,3,-Propandiamin, 1 ,6-Hexandiamin, Ethanolamin, Diethanolamin, Triethanolamin sowie andere zwei oder mehrwertige Alkohole oder ein oder mehrwertige Amine in Betracht.

Die eingesetzten Polyesterpolyole werden zumeist durch Kondensation von mehrfunktionellen Alkoholen mit 2 bis 12 Kohlenstoffatomen, wie Ethylenglykol, Diethylenglykol, Butandiol, Trimethylolpropan, Glycerin oder Pentaerythrit, mit mehrfunktionellen Carbonsäuren mit 2 bis 12 Kohlenstoffatomen, beispielsweise Bernsteinsäure, Glutarsäure, Adipinsäure, Korksäure, Azelainsäure, Sebacinsäure, Decandicarbonsäure, Maleinsäure, Fumarsäure, Phthalsäure, Isophthalsäure, Terephthalsäure und den Isomeren von Naphthalindicarbonsäuren oder deren Anhydriden, hergestellt.

Die vorliegende Erfindung richtet sich ferner auf ein Verfahren zur Montage wenigstens eines Elementes an einem Untergrund oder an einem Aufnahmekörper, insbesondere einem Gerüst, und das Verfahren umfasst wenigstens die Schritte des Anordnens einer Schiene aus einem faserverstärkten Polyurethan mit einem C-förmigen Querschnitt, die in einem Pultrusionsverfahren hergestellt wird, am Untergrund oder am Aufnahmekörper, das Anordnen wenigstens eines Hintergreifelementes an der Schiene und das Anordnen des wenigstens eines Elemente an das eine Hintergreifelement.

Das Hintergreifelement kann durch eine Hammerkopfschraube gebildet sein, die mit einem Kopf in die Schiene aus faserverstärktem Polyurethan einsetzbar ist. Der Untergrund kann bevorzugt die Außenwand eines Gebäudes sein und werden Fassadenelemente an der Außenwand des Gebäudes angeordnet, kann die Schiene als Ankerschiene oder als Montageschiene zur längsvariablen Aufnahme von Hintergreifelementen dienen. Ist die Schiene als Ankerschiene ausgeführt, weist diese wenigstens einen Anker auf, und wenn der Untergrund durch ein aushärtbares Material gebildet ist, kann die Schiene am Untergrund angeordnet werden, indem die Schiene in das aushärtbare Material eingelassen beziehungsweise mit dem aushärtbarem Material umgossen wird.

Ist die Schiene als Montageschiene ausgebildet, so dient diese vorzugsweise zur Anordnung an einem Aufnahmekörper, insbesondere an einem Gerüst. Der Aufnahmekörper kann ebenfalls durch einen Untergrund aus einem aushärtbarem Material gebildet sein, jedoch weist die Montageschiene keine Anker auf, und die Montageschiene kann beispielsweise durch ein stoffschlüssiges Verfahren, insbesondere durch ein Klebeverfahren oder mittels wenigstens eines Verbindungsmittels, beispielsweise einer Schraube oder einem Niet, mit dem Untergrund verbunden werden.

Die Schiene kann zur Ausführung des Verfahrens ein faserverstärktes Polyurethan umfassen, das eine Faserkomponente aus einer Glasfaser, aus Glasmatten, aus einer Karbonfaser, aus eine Polyesterfaser, aus einer Naturfaser, aus einer Aramidfaser, aus einer Basaltfaser oder aus eine Nylonfaser, besonders bevorzugt aus einer Glasfaser, aus einer Karbonfaser und/oder einer Aramidfaser aufweist. Zur Herstellung der Schiene wird ein Pultrusionsverfahren verwendet.

### BEVORZUGTE AUSFÜHRUNGSBEISPIELE DER ERFINDUNG

Weitere, die Erfindung verbessernde Maßnahmen werden nachstehend gemeinsam mit der Beschreibung bevorzugter Ausführungsbeispiele der Erfindung anhand der Figuren näher dargestellt. Es zeigt:
- Figur 1:: ein Ausführungsbeispiel einer Montageanordnung mit einer Schiene, die aus faserverstärktem Polyurethan gebildet ist,
- Figur 2:: eine perspektivische Ansicht einer Schiene, die als Ankerschiene ausgeführt ist,
- Figur 3: ein weiteres Ausführungsbeispiel einer Schiene, die als Ankerschiene ausgeführt ist und Anker umfasst, die wie auch die Schiene aus faserverstärktem Polyurethan gebildet sind und
- Figur 4: ein Beispiel einer Schiene, die als Montageschiene ausgeführt ist.

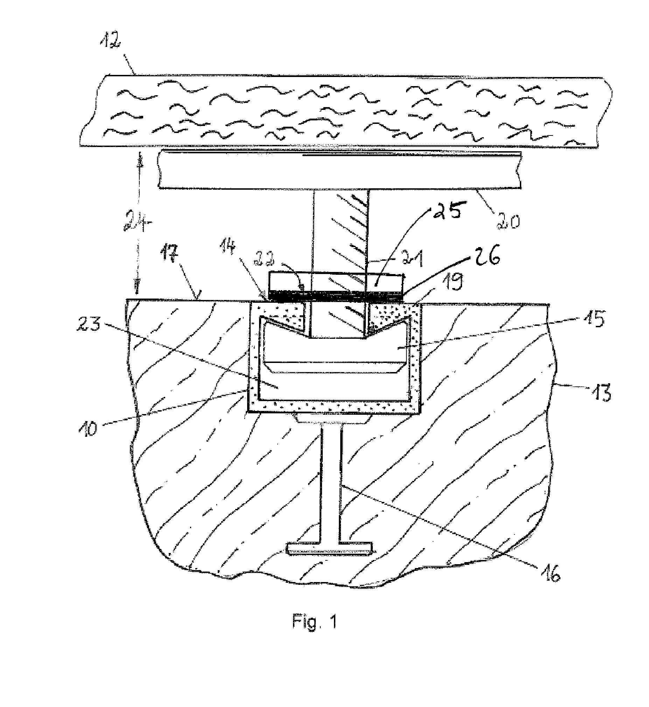

Figur 1 zeigt ein Ausführungsbeispiel einer Montageanordnung mit einer Schiene 10, die als Ankerschiene 10 ausgeführt ist und die einen Anker 16 aufweist, mit dem die Schiene in einer Wand 13 eingelassen ist. Die Wand 13 ist aus Beton gebildet, und die Schiene 10 ist mit dem Anker 16 in den Beton eingelassen.

Die Schiene 10 ist unter Verwendung eines faserverstärkten Polyurethans gebildet, das in einem Pultrusionsverfahren hergestellt wird, und die Querschnittsansicht der Schiene 10 zeigt beispielhaft eine Faserkomponente 19, die in einer Polyurethanmatrix eingebracht ist. Die Ankerschiene 10 weist einen C-förmigen Querschnitt auf, und der C-förmige Querschnitt besitzt eine Öffnungsseite 14 mit einem durchgehenden Schlitz 22. Die Anordnung der Ankerschiene 10 in der Wand 13 ist derart ausgeführt, dass die Öffnungsseite 14 plan mit der Oberfläche 17 der Wand 13 abschließt. Durch die Querschnittsansicht ist erkennbar, dass die Ankerschiene 10 aus faserverstärktem Polyurethan in direkten Kontakt mit dem Beton der Wand 13 gelangt und im Wesentlichen durch den Beton umschlossen ist. Ferner ist der Anker 16 durch den Beton der Wand 13 umgossen, wobei mithilfe des Ankers 16 die Ankerschiene 10 in der Wand 13 verankert wird.

Die Ankerschiene 10 weist durch Ihre C-förmige Gestalt einen sich längs durch die Schiene 10 hindurch erstreckenden Aufnahmeraum 23 auf, und durch den sich ebenfalls über der Längsrichtung der Schiene 10 erstreckendenden Schlitz ist der Aufnahmeraum 23 von der Öffnungsseite 14 der Schiene 10 zugänglich.

An der Schiene 10 ist ein Hintergreifelement 15 angeordnet, das beispielhaft als Hammerkopfschraube 15 ausgeführt ist. Die Hammerkopfschraube 15 weist einen Kopf auf, der im Aufnahmeraum 23 der Schiene 10 aufgenommen ist und ein am Kopf angeordneter Gewindeschaft 21 der Hammerkopfschraube 15 erstreckt sich durch den Schlitz 22 zur Außenseite der Schiene 10 hindurch. Mittels des Gewindeschaftes 21 kann das Element 12 an der Wand 13 angeordnet werden, und das Element 12 kann beispielsweise ein Fassadenelement 12 sein. Zur Anordnung des Fassadenelementes 12 am Gewindeschaft 21 der Hammerkopfschraube 15 ist beispielhaft ein Zwischenelement 20 gezeigt, das beispielsweise eine Konterlatte bildet. Ist das Element 12 beispielsweise ein Fassadenelement 12, das an der Wand 13 angeordnet ist, so ist ein Abstand 24 zwischen der Oberfläche 17 der Wand 13 und dem Element 12 vorteilhaft, um eine Luftzirkulation zwischen der Wand 13 und dem Fassadenelement 12 zu ermöglichen.

Ein weiterer Vorteil durch die Verwendung von faserverstärktem Polyurethan, das in einem Pultrusionsverfahren hergestellt wird, für eine Ankerschiene 10 in der gezeigten Anordnung ist eine niedrige Wärmeleitfähigkeit des faserverstärkten Polyurethans, um die Bildung von Wärmebrücken zwischen der Wand 13 und dem Fassadenelement 12 zu vermeiden. Insbesondere sind Hammerkopfschrauben 15 in der gezeigten Anordnung häufig aus einem Stahlwerkstoff hergestellt, um entsprechende Festigkeitsanforderungen zu erfüllen. Wird die Ankerschiene 10 aus faserverstärktem Polyurethan gebildet, so entsteht die Wärmebarriere bereits zwischen der Wand 13 und der Hammerkopfschraube 15.

Im Ergebnis können durch die Verwendung von faserverstärktem Polyurethan, das in einem Pultrusionsverfahren hergestellt wird, zur Bildung einer Montageanordnung mit einer Schiene 10 in der gezeigten Anordnung mehrere Vorteile erreicht werden, und neben den vorteilhaften Eigenschaften von faserverstärktem Polyurethan insbesondere hinsichtlich der Beständigkeit gegenüber basischen Medien kann die niedrige Wärmeleitfähigkeit von faserverstärktem Polyurethan positiv genutzt werden. Schließlich erfüllt faserverstärktes Polyurethan auch bei Bildung einer Ankerschiene 10 in der gezeigten Anordnung die Anforderungen einer hohen Festigkeit, welche Festigkeit wesentlich höher ist als die Festigkeit von sonstigen Kunststoffen, insbesondere wenn diese ohne eine Faserkomponente 19 ausgeführt sind. Im Folgenden werden Ausführungsbeispiele verschiedener Schienen 10, 11 gezeigt, die als Ankerschiene 10 oder als Montageschiene 11 ausgeführt sind. Dabei zeigt die erfindungsgemäß verwendete Ankerschiene 10 und Montageschiene 11 jeweils eine Querzugtragfähigkeit > 5 kN.

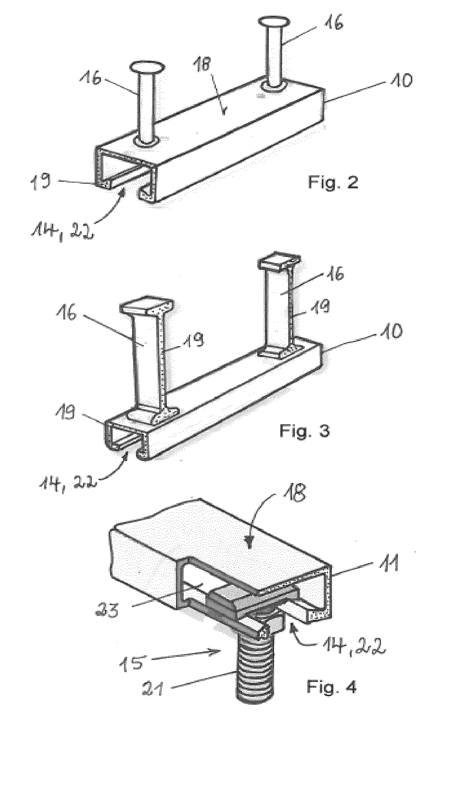

Figur 2 zeigt eine perspektivische Ansicht einer Schiene 10 aus einem faserverstärkten Polyurethan, das in einem Pultrusionsverfahren hergestellt wird, mit einer Faserkomponente 19, wie diese beispielhaft auf der Querschnittsfläche der Schiene 10 gezeigt ist. Die Schiene 10 ist als Ankerschiene 10 mit Ankern 16 ausgeführt, die sich etwa senkrecht auf der Fläche der Rückseite 18 der Ankerschiene 10 erstrecken. Die Rückseite 18 ist der Öffnungsseite 14 gegenüberliegend angeordnet und bildet die Grundseite des C-förmigen Querschnittes der Ankerschiene 10. Weiterhin gezeigt ist der durchgehende Schlitz 22, der sich durch die gesamte Länge der Ankerschiene 10 hinweg durch die Öffnungsseite 14 erstreckt.

Figur 3 zeigt ein weiteres Ausführungsbeispiel einer Ankerschiene 10 mit einem C-förmigen Querschnitt, so dass in der Öffnungsseite 14 ebenfalls ein durchgehender Schlitz 22 dargestellt ist, durch den -wie in Figur 1 gezeigt- Hintergreifelemente 15 eingesetzt werden können. Die Ankerschiene 10 weist Anker 16 auf, die ebenfalls aus einem faserverstärkten Polyurethan gebildet sind, und im Querschnitt der Anker 16 ist wie auch in der Querschnittsfläche der Ankerschiene 10 selbst eine Faserkomponente 19 angedeutet.

Sowohl die Schiene 10 als auch die Anker 16 können in einem Pultrusionsverfahren hergestellt sein. Durch ein Pultrusionsverfahren können die Schiene 10 und die Anker 16 als Endlosmaterial bereitgestellt werden und durch eine entsprechende Ablängung können die Schienen 10 und insbesondere die Anker 16 auf Ihre entsprechende Länge gebracht werden.

Figur 4 zeigt schließlich eine perspektivische Ansicht einer Schiene 11, die als Montageschiene 11 ausgeführt ist. Die Montageschiene 11 weist keine Anker 16 auf, folglich eignet sich die Montageschiene 11 vorzugsweise zur Anordnung an einem Aufnahmekörper, beispielsweise an einem Gerüst. Dabei kann die Montageschiene 11 stoffschlüssig oder über Verbindungselemente wie Schrauben oder Nieten mit der Rückseite 18 am Aufnahmekörper angeordnet werden. Im Aufnahmeraum 23 der Montageschiene 11 ist eine Hammerkopfschraube 15 aufgenommen, und aus dem durchgehenden Schlitz 22 in der Öffnungsseite 14 der Montageschiene 11 erstreckt sich ein Gewindeschaft 21 der Hammerkopfschraube 15 heraus. Auf gleiche Weise wie auch die Ankerschiene 10 gemäß der vorstehenden Ausführungsbeispiele kann die Montageschiene 11 aus einem faserverstärkten Polyurethan gebildet werden und einen C-förmigen Querschnitt aufweisen.

Die Erfindung beschränkt sich in Ihrer Ausführung nicht auf die vorstehend gezeigten, lediglich bevorzugten Ausführungsbeispiele. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten oder räumlichen Anordnungen, können sowohl für sich als auch in den verschiedensten Kombination erfindungswesentlich sein. Insbesondere können Ankerschienen 10 oder Montageschienen 11, wie diese aus metallischen Werkstoffen bekannt sind, eine über ihren C-förmigen Querschnitt gleiche Wandstärke aufweisen oder die Schienen 10, 11 weisen auf der Innenseite der Öffnungsseite 14, nämlich im Auflagebereich des Kopfes des Hintergreifelementes 15, eine Verdickung auf, wie beispielsweise in Figur 4 gezeigt. Derartige Schienen 10, 11 sind häufig nicht aus einem gebogenen Blechmaterial hergestellt, sondern diese sind aus dem Stand der Technik beispielsweise im Stranggussverfahren oder im Strangpressverfahren aus einem Aluminiumwerkstoff hergestellt. Erfindungsgemäß können derartige Schienen mit einer nicht gleichförmigen Dicke der Wandung über ihren C-förmigen Querschnitt besonders vorteilhaft im Pultrusionsverfahren aus einem faserverstärkten Polyurethan hergestellt werden.

### Bezugszeichenliste

- 10: Schiene, Ankerschiene
- 11: Schiene, Montageschiene
- 12: Element, Fassadenelement
- 13: Untergrund, Wand
- 14: Öffnungsseite
- 15: Hintergreifelement, Hammerkopfschraube
- 16: Anker
- 17: Oberfläche
- 18: Rückseite
- 19: Faserkomponente
- 20: Zwischenelement
- 21: Gewindeschaft
- 22: Schlitz
- 23: Aufnahmeraum
- 24: Abstand
- 25: Kontermutter
- 26: Unterlegscheibe

### Beispiele

### Beispiel 1: Herstellung einer Schiene aus pultrudiertem Polyurethan

Eingesetzt wurde eine Pultrusionsanlage, die eine geschlossene Injektionsbox und ein beheizbares Formwerkzeug umfasste. Die breite des flachen Bereichesdes Profils im Formwerkzeug betrug 115 mm. Die Wandstärke des Profils betrug 3 mm. Entsprechend wurden Pultrudate dieser Maße hergestellt. Es wurden Standard-Glasfasern, geeignet für die Pultrusion verwendet (Advantex® DR399A-AE 4800 von 3B, Belgien) und durch die Injektionsbox und das Formwerkzeug gezogen. Die Gesamtkonzentration des Verstärkungsmaterials, bezogen auf das Gesamtgewicht des Pultrudats betrug ca. 80 Gew. %. Die angegebenen Einsatzstoffe wurden bei Raumtemperatur in einer Niederdruckmischmaschine mit einem Statikmischer bei dem angegebenen Isocyanatindex vermischt. Anschließend wurde die Reaktionsmischung in die Injektionsbox injiziert, wodurch die Glasfasern mit der Reaktionsmischung benetzt wurden. Die benetzten Glasfasern wurden mittels einer Abzugsanlage kontinuierlich durch das Formwerkzeug gezogen und das Polyurethansystem im beheizten Formwerkzeug gehärtet. Zum Ende des Prozesses wurden die Profile auf 1 m Länge abgeschnitten.

Es wurden folgende Materialien verarbeitet:
- Polyol A: Polyetherpolyol mit einer Hydroxylzahl von 235 und einer Viskosität von 250 gemäß DIN EN ISO 3219
- Polyol B: trifunktionelles Polyetherpolyol mit einer Hydroxylzahl von 450 und einer Viskosität von 420 gemäß DIN EN ISO 3219
- Polyol C: bifunktionelles Polyetherpolyol mit einer Hydroxylzahl von 28 und einer Viskosität von 980 gemäß DIN EN ISO 3219
- Polyol D: trifunktionelles Polyetherpolyol mit einer Hydroxylzahl von 1050 und einer Viskosität von 1350 gemäß DIN EN ISO 3219
- Molekularsieb: Molsiv® L Powder, erhältlich von UOP M.S. S.r.I.; Viale Milanofiori, Strada 1, Palazzo E1, I-20090 ASSAGO MI, Mailand
- Katalysator: Zinnkatalysator FORMREZ® UL 29 erhältlich von GE Silicones
- Trennmittel: Tech-Lube® HB-550-D (erhältlich von Technick Products Inc., 238 St. Nicholas Ave., South Plainfield, NJ 07080)

| Material | Komponente A (Gewichtsteile) |
|---|---|
| Polyol A | 29,21 |
| Polyol B | 24,33 |
| Polyol C | 19,46 |
| Polyol D | 14,33 |
| Polyol E | 10 |
| Polyol F | 0 |
| Polyol G | 0 |
| Molekularsieb | 2 |
| Katalysator | 0,67 |
| Trennmittel | 4,0 |

Zur Herstellung des pultrudierten Polyurethans wurden 104 Teile der Komponente A mit 119 Teilen MDI (flüssiges MDI mit einem Monomergehalt von 40 Gew.-%, einem Gehalt an freien NCO-Gruppen von 31.4 Gew.-% und einer durchschnittlichen Funktionalität von 2.8) umgesetzt.

### Beispiel 2: Herstellung einer Schiene aus Epoxyharz

Zur Herstellung einer Schiene aus Epoxyharz wurden entsprechend 100 Gewichtsteile Infusionsharz MGS 100 RIM-135 (erhältlich von Hexion®) mit 30 Teilen Härter MGS RIMH 137 (erhältlich von Hexion®) und 3,25 Teilen Trennmittel G161 (erhältlich von Wela-Handelsgesellschaft) verarbeitet.

### Beispiel 3: Herstellung einer Schiene aus ungesättigtem Polyesterharz

Zur Herstellung einer Schiene aus ungesättigtem Polyesterharz werden 95 Gewichtsteile Viapal® UP 002/60 (erhältlich von der Firma Lange+Ritter GmbH), 2 Gewichtsteile Peroxid CuroxA® (erhältlich von der Firma Lange+Ritter GmbH), 0,5 Gewichtsteile Beschleuniger C101 (erhältlich von der Firma Lange+Ritter GmbH) und 2,5 Gewichtsteile Trennmittel G161 (erhältlich von Wela-Handelsgesellschaft) verarbeitet.

### Beispiel 4: Messung der interlaminaren Scherfestigkeit nach alkalischer Behandlung

Die nach den vorstehenden Beispielen hergestellten Schienen wurden einem Test zum Messen der interlaminaren Scherfestigkeit oder "ILSS" (vom englischen Interlaminar Shear Strength) unterzogen, der dem Fachmann wohlbekannt und in den Norm ASTM D2344 beschrieben ist. Dazu wurden die Schienen in einer 10%-igen wässrigen Natriumhydroxid-Lösung gelagert.

Die Schiene nach Beispiel 1 wies nach 90 Tagen keine Verringerung der Scherfestigkeit auf. Die Schiene nach Beispiel 2 wies nach 59 Tagen eine wenigstens 15 % geringere Scherfestigkeit auf, bezogen auf den Ausgangswert. Die Schiene nach Beispiel 3 wies nach 15 Tagen eine wenigstens 15 % geringere Scherfestigkeit auf, bezogen auf den Ausgangswert.

Die Beispiele zeigen, dass erfindungsgemäße Schienen aus pultrudiertem Polyurethan eine sehr gute Beständigkeit in stark alkalischen Medien aufweisen. Daher eignen sich diese Schienen als Element, das in Beton eingebracht oder an Beton befestigt werden kann.

## Patentansprüche

1. Verwendung von faserverstärktem Polyurethan zur Bildung einer Schiene (10, 11) für eine Montageanordnung zur Anordnung wenigstens eines Elementes (12) an einem Untergrund (13) oder an einem Aufnahmekörper, wobei die Schiene (10, 11) einen C-förmigen Querschnitt mit einer Öffnungsseite (14) aufweist, sodass in der Schiene (10, 11) wenigstens ein Hintergreifelement (15) zur Verbindung mit dem anzuordnenden Element (12) aufnehmbar ist, **dadurch gekennzeichnet, dass** die Schiene (10, 11) durch ein Pultrusionsverfahren hergestellt ist.

2. Verwendung nach Anspruch 1, wobei die Schiene (10) als Ankerschiene (10) mit wenigstens einem Anker (16) ausgebildet ist und wobei der Untergrund (13) durch ein aushärtbares Material gebildet ist.

3. Verwendung nach Anspruch 1, wobei die Schiene (10) in einem aushärtbarem Material eingegossen wird, insbesondere derart, dass die Öffnungsseite (14) etwa mit einer Oberfläche (17) des Untergrunds (13) abschließt.

4. Verwendung nach Anspruch 1, wobei die Schiene (11) als Montageschiene (11) zur Anordnung an einem Untergrund (13) oder an einem Aufnahmekörper ausgebildet ist, und wobei die Schiene (11) mit einer der Öffnungsseite (14) gegenüberliegenden Rückseite (18) am Aufnahmekörperbefestigt wird.

5. Verwendung nach einem der vorgenannten Ansprüche, wobei das faserverstärkte Polyurethan wenigstens eine Faserkomponente (19) ausgewählt aus der Gruppe bestehend aus Glasfasern, Glasmatten, Karbonfasern, Polyesterfasern, Naturfasern, Aramidfasern, Basaltfasern und Nylonfasern aufweist.

6. Verwendung nach einem der vorgenannten Ansprüche, wobei das Polyurethan aus wenigstens einem Polyol ausgewählt aus der Gruppe bestehend aus Polyetherpolyole und Polyesterpolyolen und wenigstens einem Polyisocyanat gebildet wird.

7. Verfahren zur Montage wenigstens eines Elementes (12) an einem Untergrund (13) oder an einem Aufnahmekörper, wobei das Verfahren wenigstens die folgenden Schritte aufweist:
- Anordnen einer Schiene (10, 11) aus einem faserverstärkten Polyurethan mit einem C-förmigen Querschnitt am Untergrund (13) oder am Aufnahmekörper,
- Anordnen wenigstens eines Hintergreifelementes (15) an der Schiene (10, 11) und
- Anordnen des wenigstens einen Elementes (12) an das Hintergreifelement (15), **dadurch gekennzeichnet, dass** die Schiene (10, 11) durch ein Pultrusionsverfahren hergestellt ist.

8. Verfahren nach Anspruch 7, wobei das wenigstens eine Element (12) durch ein Fassadenelement (12) gebildet ist und/oder wobei der Untergrund (13) eine Außenwand eines Gebäudes ist.

9. Verfahren nach Anspruch 7 oder 8, wobei die Schiene (10) als Ankerschiene (10) mit wenigstens einem Anker (16) ausgebildet ist und wobei der Untergrund (13) durch ein aushärtbares Material gebildet ist, und sodass die Schiene (10) zur Anordnung am Untergrund (13) mit dem Anker (16) in ein aushärtbares Material eingelassen bzw. mit dem aushärtbarem Material umgossen wird.

10. Verfahren nach Anspruch 7 oder 8, wobei die Schiene (11) als Montageschiene (11) zur Anordnung an einem Aufnahmekörper, insbesondere einem Gerüst, ausgebildet ist und wobei die Schiene (11) zur Anordnung am Aufnahmekörper mit diesem stoffschlüssig, insbesondere durch ein Klebeverfahren, oder mittels wenigstens eines Verbindungsmittels, beispielsweise einer Schraube oder einem Niet, verbunden wird.

11. Verfahren nach einem der Ansprüche 7 bis 10, wobei das faserverstärkte Polyurethan eine Faserkomponente (19) aus einer Glasfaser, aus einer Carbonfaser und/oder aus einer Aramidfaser aufweist und/oder wobei die Schiene (10, 11) durch ein Pultrusionsverfahren hergestellt ist.
